(19)

Europäisches Patentamt

European Patent Office

Office européen des brevets

(11) **EP 3 321 892 A1**

(12) **EUROPEAN PATENT APPLICATION**

(43) Date of publication:
**16.05.2018 Bulletin 2018/20**

(51) Int Cl.:
**G07C 9/00** (2006.01)          **H04L 9/08** (2006.01)
**H04L 9/32** (2006.01)

(21) Application number: **16306480.1**

(22) Date of filing: **10.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **GEMALTO SA**
**92190 Meudon (FR)**

(72) Inventor: **CASTILLO, Laurent**
**92190 Meudon (FR)**

(74) Representative: **Delaval, Guillaume Laurent**
**Gemalto SA**
**Intellectual Property Department**
**6, rue de la Verrerie**
**92197 Meudon Cedex (FR)**

(54) **A PHYSICAL KEY FOR PROVISIONING A COMMUNICATION DEVICE WITH DATA ALLOWING IT TO ACCESS A VEHICLE RESOURCE**

(57)  This invention relates to a physical key (100) for provisioning a communication device (101) with data allowing said communication device (101) to access a vehicle resource by operating remotely a vehicle lock system (130) in which a first cryptographic key called master key is stored, comprising a secure enclave also storing the master key, the physical key being configured to: establish a communication link (110) with the communication device (101); derive by the secure enclave a second cryptographic key called derived key from the master key; transmit to the communication device (101) via the secure communication link (110) the derived key for enabling the communication device (101) to answer a security challenge from the vehicle lock system (130) and the vehicle lock system (130) to verify said answer, the access to the vehicle resource being allowed if the answer is successfully verified.

**Fig. 1**

EP 3 321 892 A1

**Description**

TECHNICAL FIELD

The present invention relates to a physical key for provisioning a communication device with data allowing it to access a vehicle resource. It is applicable to the Internet-of-things and to secure embedded systems.

BACKGROUND OF THE INVENTION

More and more automobile manufacturers offer electronic car locks that are mainly used for opening and starting a car. An electronic car lock is generally associated with one or several physical keys embedding basic electronic components in order to offer connectivity to the lock and securing the key secrets.

The most secure version of these physical keys contain an embedded secure element (eSE) holding secret material. These physical keys are lifelong keys and provide full access to the car, which restricts who they can be lent to.

Another trend for car manufacturers is to try and put car keys inside an owner's mobile phone, for convenience reasons. These are so called virtual car keys. But to secure the keys at the same level as the physical keys, they often use hardware security on the phone, for example a trusted execution environment (TEEs), a smartcard with a subscriber identity module (SIM) application, an embedded secure element (eSE), or a combination thereof. This drastically limits which kind of device they can deploy on or add complex dependencies to secure element issuers.

SUMMARY OF THE INVENTION

This invention related to a physical key for provisioning a communication device with data allowing said communication device to access a vehicle resource by operating remotely a vehicle lock system in which a first cryptographic key called master key is stored, comprising a secure enclave also storing the master key, the physical key being configured to:

- establish a communication link with the communication device;
- derive by the secure enclave a second cryptographic key called derived key from the master key;
- transmit to the communication device via the secure communication link the derived key for enabling the communication device to answer a security challenge from the vehicle lock system and the vehicle lock system to verify said answer, the access to the vehicle resource being allowed if the answer is successfully verified.

According to one embodiment of the invention, the derived key is derived from a set of at least one validity parameter that is taken in addition to the master key, the set of at least one validity parameter defining at least one access rule limiting the access to the vehicle resource.

As an example, the set of at least one validity parameter defines an expiration date after which the derived key cannot be used for accessing the resource.

As an example, the set of at least one validity parameter defines a time period in a day during which the derived key is usable for accessing the vehicle's resource.

As an example, the set of at least one validity parameter defines a list of at least one action that can be carried out by the communication device for accessing the vehicle's resource.

According to one aspect of the invention, the physical key is composed of a vehicle remote and a traditional key.

In one embodiment, the secure enclave is an embedded secure element.

In another embodiment, the secure enclave is a trusted execution environment.

The invention also relates to a vehicle lock installed on a vehicle memorizing a master key in a secure enclave, the vehicle lock being configured to communicate remotely with a communication device provisioned with a derived key generated by a physical key according to any of the preceding claims, wherein it is further configured to:

- send to the communication device a challenge message comprising a random number;
- receive from the communication device a security challenge answer determined using the derived key and the random number;
- generate locally the derived key using the master key and compute locally a version of the security challenge answer to verify that it is identical to the one received from the communication device;
- in case of a positive verification, grant the access to the vehicle resource.

According to one aspect of the invention, the derived key is derived from a set of at least one validity parameter that is taken in addition to the master key and also received from the physical key, the set of at least one validity parameter defining at least one access rule limiting the access to the vehicle resource.

As an example, the set of at least one validity parameter defines an expiration date after which the derived key cannot be used for accessing the resource.

As an example, the set of at least one validity parameter defines a time period in a day during which the derived key is usable for accessing the vehicle's resource.

As an example, the set of at least one validity parameter defines a list of at least one action that can be carried out by the communication device for accessing the vehicle's resource.

BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:

- Figure 1 illustrates schematically a technique for an owner to delegate access to its car;
- Figure 2 provides an example of a sequence diagram where a mobile application is provisioned by a derived key for accessing the resources of a car;
- Figure 3 provides an example of a sequence diagram in which a mobile application is used to open a vehicle lock.

DETAILED DESCRIPTION

In this description, a physical key refers to at least a vehicle remote that is capable of communicating with a vehicle lock for providing access to at least some of the vehicle's resources. It is called physical as it can be held in the hand.

A vehicle is a mobile machine configured to transport goods or people including but not limited to a car, a truck, a boat or a wagon. A vehicle resource refers to a part or a function provided to the owner of the car or an authorized person, such as a trunk, a vehicle cabin accessible by opening a door or the starting of an engine.

The expression vehicle lock refers for example to an electro-mechanical device implemented into one or several of the vehicle's doors and controlled by the vehicle remote with the function of locking or unlocking it. The vehicle lock can also refer to the system used to start the vehicle. For a given vehicle, one can have one or several installed vehicle locks. A vehicle lock system refers to a set of one or several lock installed on a given vehicle.

A physical key therefore refers to a vehicle remote allowing the access to at least a vehicle resource. The physical key can also refer to a combination of a vehicle remote associated with a traditional key. A traditional key refers to a device configured to operate a mechanical lock. A physical key can also be implemented into a single device comprising the vehicle remote and a traditional key or alternately in two separate devices.

In this description, the expressions "master key" and "derived key" are referring to cryptographic keys used for cryptographic functions. A cryptographic key is a piece of information that can be memorized into the memory of an electrical device such as a vehicle remote, a smartphone or a vehicle lock.

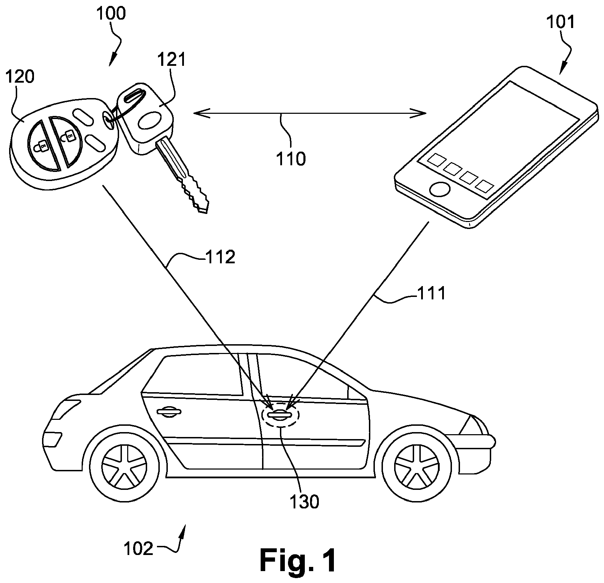

**Figure 1** illustrates schematically a technique for an owner to delegate access to its car. For that purpose, the owner uses a physical key 100 comprising for example a vehicle remote 120 associated with a traditional key 121.

The physical key 100 can be used by the owner to access or to start his car 102 and is generally provided with the car at the time of purchase. The physical key as well as the vehicle locks installed on the car are provisioned with a master key during a personalization phase performed in a production facility.

The vehicle remote 120 can be used for establishing a communication link 112 with a vehicle lock 130 for example using infra-red technologies. Techniques that are belonging to the state of the art can be used for that purpose.

In addition, the owner of the car 102 can configure a communication device for accessing its car taking into account a set of at least one access rule. According to this example, the communication device is a smartphone 101. However, the invention is applicable to other types of communication devices, for example a smart watch or any electronic device comprising means to establish a communication link with the physical key 100 and a vehicle lock.

Using a communication device that is distinct from the physical key 100 presents several advantages. If the smartphone 102 belongs to the user, it allows him to leaves its physical key 100 at home. In another use case, the smartphone phone 102 may belong to a third party, for example a member of the owner's family or a friend. In that case, the owner is able to delegate a partial access to the car 102 by defining one or several access rules.

According to this example, a communication link is established between the physical key 100 and the smartphone 101 using a short-range communication protocol. Short-range communication protocols include but are not limited to Bluetooth, Bluetooth Low Energy (BLE) or Near-Field Communications (NFC) protocols. This communication link is preferably secured using state-of-the-art techniques as the data to be exchanged is sensitive.

Once the communication link 110 is established, the physical key sends a key that is derived from the master key. According to one aspect of the invention, the master key is stored securely in a secure enclave implemented into the physical key 100. In one embodiment, the secure enclave is a secure element embedded into the vehicle remote 120.

Secure elements are small devices comprising a memory, a microprocessor and an operating system for computing treatments. Such secure elements may comprise a plurality of memories of different types. They are called "secure" because they are able to control the access to the data they contain and to authorize or not the use of data by other machines. The secure elements may also provide computation services based on cryptographic components. In general, secure elements have limited computing resources and are intended to be connected to a host machine. Secure elements may be removable or fixed to a host device.

The secure elements may embed an object-oriented virtual machine in order to be able to run applications written in an object-oriented language. Usually, these object-oriented applications manage applicative data which are stored into the secure element.

Other types of secure enclaves can also be used to memorize the master key, for example a trusted execution environment (TEE).

The smartphone 101 can use an application to manage the provisioning of the derived keys and to display information such as the access rules associated to a given derived key when required by the user of the application. The application can be made available on some application stores such as the App Store (trademark) or Google Play (trademark). Once configured and provisioned with the derived key and its associated access rules, the user can use the application to access some of the car resources.

As underlined, a derived key is associated to one or several access rules. An access rule is designed to limit the access to a vehicle lock system, for example the car trunk can be accessible but not the car doors. If the access rules allow the access to various resources of the car, the application can propose to the user different choices, for example "open the trunk", "open the right front door" or "start the car". If the user selects "open the right front door", a challenge can be sent by the smartphone 101 to the vehicle lock 130 and if it is successfully answered, the right front door finally opens. In this description, it is considered that a single derived key is calculated for a car. However, the invention is also applicable in the case where several derived keys are allocated to the car. For example, a different derived key can be allocated to each of the vehicle locks.

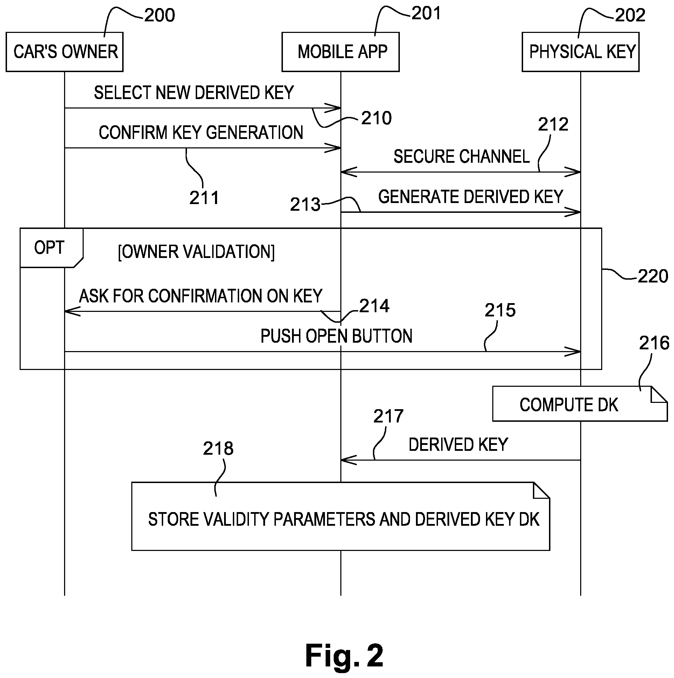

**Figure 2** provides an example of a sequence diagram where a mobile application is provisioned by a derived key for accessing to the resources of a car.

According to this example, the owner of the car 200 uses a mobile application 201 installed on a smartphone and selects 210 in a menu that a new derived key is required for this communication device. The owner 200 is then asked by the mobile application 201 to confirm the need for generating the new derived key. Once this is confirmed 211, the mobile application 201 and the physical key 202 establish 212 a secure channel via the smartphone (not represented). This secure channel is established for example using Bluetooth Low Energy (BLE).

Then, a request 213 to generate a new derived key is sent by the mobile application 201 via the smartphone to the physical key 202. This request 213 can be sent together with a set of at least one validity parameter defining the access rules, that is to say the conditions in which the derived key can be used for accessing the car resources. For example, the validity parameters include an expiration date after which the derived key will not be usable anymore, one or several time periods during which the access is allowed and an identifier of the resources for which the access is authorized. This identifier can be used to designate one of the car's door, the trunk or the starter.

According to one embodiment 220, a confirmation can then be requested 214 by the mobile application 201 to the owner 200. For example, a message is displayed on the smartphone's screen answering him to push a specific button located on its physical key 202. The owner then pushes 215 the button and the computation 216 of the derived key by the physical key 202 is triggered.

The master key MK is securely stored in a secure enclave embedded into the physical key 202. The derived key is designated as DK in the sequel and can be obtained by applying well-known derivation functions such as HMAC Key Derivation Function (HKDF), KDF1 or KDF2 as defined in ISO/IEC 18033 specification.

According to one aspect of the invention, one or several validity parameters are used as inputs for the derivation algorithm. In that case, the DK is derived from the master key MK and a set of at least one validity parameters, which can be expressed as follow:

$$DK = Derive1(MK, VP, Salt)$$

where:

DK designates the derived key;

MK designates the master key that is stored in a secure enclave of the physical key. It is to be noted that the master key is also stored in the memory of at least one vehicle lock;

Salt designates a derivation seed chosen by the physical key manufacturer in order to diversify the results from other manufacturers;

VP designates the validation parameters used to define the access rules;

Derive1( ) designates the derivation function used to calculate the derived key. This function can be an example an HKDF, KDF1 or KDF2 function.

Once the newly generated derived key is available, it can be sent 217 by the physical key 202 to the mobile application 201. The validity parameters and the mobile key DK are then stored 218 in the smartphone. As an example, those can be memorized into an embedded secure element (eSE), a SIM card, a trusted execution environment (TEE) or protected using white box cryptography (WBC) technique.

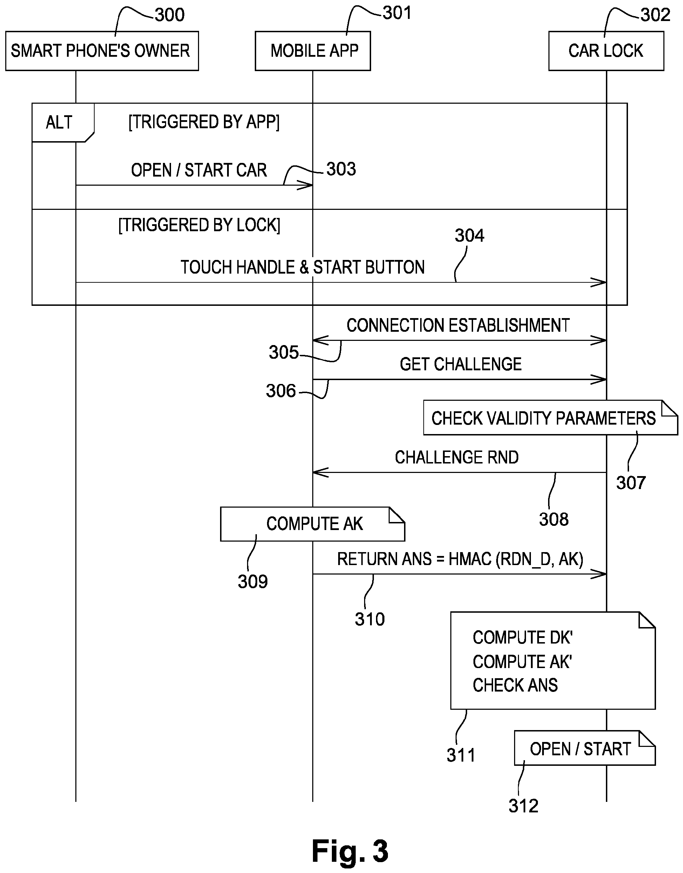

**Figure 3** provides an example of a sequence diagram in which a mobile application is used to open a vehicle lock.

The owner of the smartphone 300 requests an access to the car. The so-called owner of the smartphone can be the owner of the car or a third party to which an access to some of the car resources is delegated. For sending the request, he can push 303 a button displayed on the screen of the smartphone by the mobile application 301. As an example, the owner 300 can choose among several actions associated to a given resource of the car. Example of choices that can be made available to the owner of the smartphone are: opening one or all of the car's doors, opening the trunk or starting the car. Those different actions can be materialized by different buttons displayed on the smartphone's screen.

Alternatively, the smartphone's owner can push 304 a button on or inside the car, for example a button that is located next to the starter if he want to start the car.

Once this is done, a connection link is established 305 between the mobile application 301 and the car lock 302. For example, the car lock 302 can act like a beacon supporting Bluetooth Low Energy (BLE). Once it is detected by the smartphone, a communication link is established. Other technologies such as NFC can also be used. In that case, the communication link can be established by tapping an NFC-enabled smartphone to the vehicle lock 302.

Once the communication link is established, a request for challenge is sent 306 by the mobile application 301 to the vehicle lock 302 together with the validity parameters VP that have been stored in the smartphone at the time of generating the derived key. It can also be sent with an action ACT identifying what the user wants to do, for example opening the car's trunk.

The vehicle lock checks 307 the validity parameters. In other words, it verifies the access rules defined by the validity parameters. For example, if the validity parameters are chosen such that the smartphone's owner is allowed to start the car between 5 and 7 p.m., and that the time maintained by the car lock corresponds to 9 p.m., the access is denied. On the contrary, if the validity parameters are positively verified, a challenge-response authentication is carried out. For that purpose, a challenge message 308 comprising a random number RND is transmitted by the vehicle lock 302 to the mobile application 301. Then, an intermediate key AK is determined 309 by the mobile application 301. AK is for example derived from the mobile key DK and the action ACT:

$$AK = Derive2(DK, ACT, Salt2)$$

Where

AK designates an intermediate key used to generate the response to the challenge;

DK designates the mobile key memorized in the smartphone;

ACT designates the action that the owner of the smartphone wants to carry out;

Salt2 designates a derivation seed chosen by the physical key manufacturer in order to diversify the results from other manufacturers; Derive2( ) designates the derivation function used to calculate the intermediate key AK. This function can be for example an HKDF, KDF1 or KDF2 function.

Then, the response to the challenge is calculated using a Keyed-Hash Message Authentication Code (HMAC) function:

$$ANS = HMAC(RND, AK)$$

Where:

ANS designates the answer to the challenge;
RND designates the random number that has been transmitted with the challenge message;
AK designates the intermediate key, previously mentioned in this description;
HMAC() designates the Keyed-Hash Message Authentication Code function

The answer ANS is then transmitted 310 by the mobile application 301 to the vehicle lock 302 together with a return message 310. Once this message is received by the car lock 302, it calculates 311 a version DK' of the derived key based on what it knows and what is received. An intermediate key AK' is also calculated:

$$DK' = Derive1(MK, VP)$$

$$AK' = Derive2(DK', ACT)$$

Then, the answer is re-calculated as follow:

$$ANS' = HMAC(RND, AK')$$

If the received answer ANS is equal to the re-calculated one ANS', the action ACT can be carried out 312, for example "opening the car's trunk" or "starting the car".

In an alternative embodiment, steps 309 and 310 can be replaced as follow. The answer is calculated using the following expression:

$$ANS = HMAC(RND|ACT, DK)$$

Where RND|ACT represents the concatenation of RND

with *ACT*. In that case, no intermediate key *AK* is required and the verification is done by the vehicle lock by recalculating the derived key and the received answer as follow:

$$DK' = Derive1(MK, VP)$$

$$ANS' = HMAC(RND|ACT, DK')$$

One advantage of the invention is that the master key MK is never transmitted once provisioned on the physical key and is kept securely in a secure enclave. When delegating the rights to access to a car resource, it is a derived key that is generated and transmitted to communication device. The interest of associating the derived key with a set of validity parameters is to limit the possibility of using this key compared to what can be done when using the physical key directly. For example, the physical key allows a complete access to the vehicle resources while the communication device that is using the derived key is only able to access to a subset of the available resources for a limited period of time. The derived key is less secure than the master key as it is transmitted over the air, but this drawback is advantageously mitigated by limiting its use using the access rules materialized by the validity parameters.

The embodiments of the invention described above propose to use a so-called derived key obtained from a master key provisioned in the vehicle lock. However, the skilled person will understand that alternatively, a key pair comprising a public key and a private key can be derived from the master key. In that case, this derived key pair is used for enabling the communication device 101 to answer a security challenge from the vehicle lock system 130 and the vehicle lock system 130 to verify said answer, the access to the vehicle resource being allowed if the answer is successfully verified.

Further, the invention is described in this specification for controlling the access to the resource of a vehicle. However, the skilled person will understand that the various embodiment of the invention are also applicable to controlling the resources of a house. For example, the opening of the entrance door of the house can be controlled by a communication device by implementing the invention.

## Claims

1. A physical key (100) for provisioning a communication device (101) with data allowing said communication device (101) to access a vehicle resource by operating remotely a vehicle lock system (130) in which a first cryptographic key called master key is stored, comprising a secure enclave also storing the master key, the physical key being configured to:

   - establish a communication link (110) with the communication device (101);
   - derive by the secure enclave a second cryptographic key called derived key from the master key;
   - transmit to the communication device (101) via the secure communication link (110) the derived key for enabling the communication device (101) to answer a security challenge from the vehicle lock system (130) and the vehicle lock system (130) to verify said answer, the access to the vehicle resource being allowed if the answer is successfully verified.

2. A physical key (101) according to claim 1, wherein the derived key is derived from a set of at least one validity parameter that is taken in addition to the master key, the set of at least one validity parameter defining at least one access rule limiting the access to the vehicle resource.

3. A physical key (101) according to claim 2, wherein the set of at least one validity parameter defines an expiration date after which the derived key cannot be used for accessing the resource.

4. A physical key according to claim 2 or 3, wherein the set of at least one validity parameter defines a time period in a day during which the derived key is usable for accessing the vehicle's resource.

5. A physical key according to any of claims 2 to 4, wherein the set of at least one validity parameter defines a list of at least one action that can be carried out by the communication device (101) for accessing the vehicle's resource.

6. A physical key (101) according to any of the preceding claims composed of a vehicle remote (120) and a traditional key (121).

7. A physical key (101) according to any of the preceding claims, wherein the secure enclave is an embedded secure element.

8. A physical key (101) according to any of the preceding claims, wherein the secure enclave is a trusted execution environment.

9. A vehicle lock (130) installed on a vehicle memorizing a master key in a secure enclave, the vehicle lock (130) being configured to communicate remotely with a communication device (101) provisioned with a derived key generated by a physical key according to any of the preceding claims, wherein it is further configured to:

- send to the communication device a challenge message (308) comprising a random number;
- receive from the communication device (101) a security challenge answer (310) determined using the derived key and the random number;
- generate locally the derived key using the master key and compute locally a version of the security challenge answer to verify that it is identical to the one received from the communication device (101);
- in case of a positive verification, grant the access to the vehicle resource.

10. A vehicle lock (130) according to claim 9, wherein the derived key is derived from a set of at least one validity parameter that is taken in addition to the master key and also received from the physical key, the set of at least one validity parameter defining at least one access rule limiting the access to the vehicle resource.

11. A vehicle lock (130) according to claim 10, wherein the set of at least one validity parameter defines an expiration date after which the derived key cannot be used for accessing the resource.

12. A vehicle lock (130) according to claim 10 or 11, wherein the set of at least one validity parameter defines a time period in a day during which the derived key is usable for accessing the vehicle's resource.

13. A vehicle lock according to any of claims 10 to 12, wherein the set of at least one validity parameter defines a list of at least one action that can be carried out by the communication device (101) for accessing the vehicle's resource.

**Fig. 1**

CAR'S OWNER ~200   MOBILE APP ~201   PHYSICAL KEY ~202

SELECT NEW DERIVED KEY ~210

CONFIRM KEY GENERATION

212

SECURE CHANNEL

211

213~ GENERATE DERIVED KEY

OPT   [OWNER VALIDATION]

~220

ASK FOR CONFIRMATION ON KEY ~214

215

PUSH OPEN BUTTON

216

COMPUTE DK

217

DERIVED KEY

218

STORE VALIDITY PARAMETERS AND DERIVED KEY DK

**Fig. 2**

**Fig. 3**

Europäisches
Patentamt

European
Patent Office

Office européen
des brevets

## EUROPEAN SEARCH REPORT

Application Number

EP 16 30 6480

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| X<br><br>Y | US 2016/035147 A1 (HUANG STEPHAN [US])<br>4 February 2016 (2016-02-04)<br>* figures 3,4,5,6 *<br>* paragraph [0001] *<br>* paragraph [0014] - paragraph [0015] *<br>* paragraph [0023] *<br>* paragraph [0026] *<br>* paragraph [0028] - paragraph [0039] *<br>* paragraph [0044] - paragraph [0053] *<br>----- | 9-13<br><br>1-8 | INV.<br>G07C9/00<br>H04L9/08<br>H04L9/32 |
| Y<br><br>A | US 2014/277837 A1 (HATTON DAVID ANTHONY [US]) 18 September 2014 (2014-09-18)<br>* figures 2C,3B,5 *<br>* paragraph [0054] *<br>* paragraph [0059] *<br>* paragraph [0061] *<br>* paragraph [0065] *<br>* paragraph [0087] *<br>* paragraph [0091] - paragraph [0092] *<br>* paragraph [0095] *<br>----- | 1-8<br><br>9-13 | |
| A | US 2005/151619 A1 (FOREST THOMAS M [US] ET AL) 14 July 2005 (2005-07-14)<br>* figures 1,3 *<br>* paragraph [0001] *<br>* paragraph [0003] - paragraph [0004] *<br>* paragraph [0017] *<br>* paragraph [0023] - paragraph [0024] *<br>----- | 1,9 | TECHNICAL FIELDS SEARCHED  (IPC)<br><br>G07C<br>H04L<br>G06F<br>B60R<br>G07B |
| A | US 6 975 202 B1 (RODRIGUEZ HERMAN [US] ET AL) 13 December 2005 (2005-12-13)<br>* figures 1,4,6,7 *<br>* column 1, line 7 - line 11 *<br>* column 10, line 10 - line 65 *<br>* column 11, line 56 - column 12, line 18 *<br>* column 12, line 35 - line 41 *<br>* column 13, line 1 - line 51 *<br>* column 14, line 36 - line 42 *<br>----- | 1-5,9-13 | |

The present search report has been drawn up for all claims

| Place of search | Date of completion of the search | Examiner |
|---|---|---|
| The Hague | 3 May 2017 | Ngandu, William |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 30 6480

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2017

| Patent document cited in search report | Publication date | Patent family member(s) | Publication date |
|---|---|---|---|
| US 2016035147 A1 | 04-02-2016 | CN 105323302 A<br>DE 102015111526 A1<br>US 2016035147 A1 | 10-02-2016<br>04-02-2016<br>04-02-2016 |
| US 2014277837 A1 | 18-09-2014 | CN 104050736 A<br>DE 102014204225 A1<br>US 2014277837 A1<br>US 2015175127 A1<br>US 2015379790 A1 | 17-09-2014<br>18-09-2014<br>18-09-2014<br>25-06-2015<br>31-12-2015 |
| US 2005151619 A1 | 14-07-2005 | NONE | |
| US 6975202 B1 | 13-12-2005 | NONE | |

EPO FORM P0459

For more details about this annex : see Official Journal of the European Patent Office, No. 12/82